# EUROPEAN PATENT SPECIFICATION

(11) **EP 1 771 317 B1**
(45) Date of publication and mention of the grant of the patent: **02.06.2010**
(21) Application number: 05769063.8
(22) Date of filing: 11.07.2005
(51) Int. Cl.: B60R 13/10

(54) **SIGN PLATES**
SIGNIERPLATTEN
PLAQUES SIGNALETIQUES

(30) Priority: 09.07.2004 GB 0415368
(43) Date of publication of application: 11.04.2007
(73) Proprietor: FX3 Signs & Lighting Limited, North Finchley, London N12 0BT (GB); Leonidou, George, New Barnet, Hertfordshire EN5 1JT (GB)
(72) Inventor: LEONIDOU, George, Hertfordshire EN5 1JT (GB)
(74) Representative: McIlroy, Steven David
(86) International application number: PCT/GB2005/002751
(87) International publication number: WO 2006/005954

(56) References cited:
- EP-A- 1 248 275
- DE-A1- 4 109 532
- US-A1- 2001 040 393
- US-A1- 2004 042 226

## Description

### Field of the invention

The present invention relates to sign plates and particularly, but not exclusively, to a rear-illuminated vehicle number plate. Document DE 4109532 A1 discloses such a type of number plate.

### Background of the invention

In many countries, including the United Kingdom, it is a legal requirement for the rear number plate of a vehicle to be illuminated. Conventionally, this is achieved by mounting one or more bulbs adjacent the number plate on, for example, the surrounding boot lid or bumper. However, this method of illumination normally relies on one or two point sources of light and thus generally results in nonuniform illumination across the surface area of the number plate. Moreover, externally mounted bulbs are vulnerable to breakage or blow-out and can be affected by the build up of dirt thereon which reduces light output and number plate illumination.

Illumination of rear number plates by a light source located behind the rear face of the plate has been contemplated as a means of overcoming the aforementioned disadvantages and as a basis for the creation of more aesthetically pleasing designs for both rear and front number plates. However, in the United Kingdom, any physical modifications to number plates must fall within the scope of the relevant legislation, in particular the Road Vehicles (Display of Registration Marks) Regulations 2001 which came in to force on 1 September 2001 and which set out the current legal requirements for the display of vehicle number plates conforming to the British Standard specification BS AU 145d.

This Standard provides rules governing the physical characteristics of number plates including their strength, visibility and reflectivity. The current rules state that a number plate (i) must be marked with the British Standard number BS AU 145d; (ii) must identify the plate manufacturer or supplier including their name and postcode; (iii) may optionally include a non reflective border and nationality indicators; and (iv) must include "no other markings or material". Similar laws govern the required physical characteristics of number plates in other countries.

It is with this final requirement that a number plate should include "no other markings or material" that rear illumination can cause difficulties. Not only does this restriction leave little scope for artistic expression, it also requires that the internal structure of a number plate must not be visible to the naked eye, both when illuminated and when not.

For this reason, established methods of rear illumination cannot necessarily be applied directly from the sign making industry. Although aesthetically pleasing in low light or dark ambient conditions, glass or clear plastic signs capable of producing striking visual effects (such as silhouettes, halos and auras) reveal their internal structure to the naked.eye when the illumination source is turned off or during daylight ambient conditions. For the purposes of BS AU 145d, the visible internal structure of the number plate constitutes "additional markings" and is thus forbidden.

### Summary of the invention

According to a first aspect of the present invention there is provided a sign plate for use as a number plate on a motor vehicle, said sign plate comprising: a base substrate layer of a light transmitting material having an indicium provided on a front surface thereof; a layer of translucent material applied to a rear surface of the base substrate layer; and an opaque reflective layer applied to the free surface of said translucent layer, wherein openings are formed in the opaque reflective layer which are dimensioned to substantially correspond with, and which are in general register with, the indicium applied to the front surface of the base substrate layer.

Preferably, the indicium applied to the front surface of the base substrate has rearwardly directed opaque reflective surfaces.

Optionally, a white reflective layer is provided as an intermediate layer between the base substrate layer and the indicium.

Preferably, the light transmitting material is formed from a transparent plastics material.

Preferably, the transparent plastics material is acrylic.

Optionally, the front facing surface of the opaque reflective layer is coloured white or yellow.

Optionally, the surface area of the indicium is less than, greater than, or equal to the area of the corresponding opening formed in the opaque reflective layer.

Optionally, the indicium and the corresponding openings in the opaque reflective layer are not in exact alignment with respect to each other.

Preferably, the layer of translucent material extends continuously over substantially the entire rear surface of the base substrate layer.

Alternatively, openings are formed in the layer of translucent material, the boundaries of which are dimensioned to exactly correspond with those of the indicium and which are positioned in exact alignment with those of the indicium.

Alternatively, openings are formed in the layer of translucent material, the boundaries of which are dimensioned to be smaller than those of the indicium and which are positioned within the umbrella of the indicium.

Preferably, a further protective layer of transparent plastics material covers the indicium on the front surface of the base substrate layer.

Preferably, a layer of light diffusing material is applied to the rear surface of the opaque reflective layer.

Preferably, the layer of light diffusing material is formed from a milky white translucent material.

Optionally, a layer of fluorescent material acts as the light diffusing layer.

Optionally, the layer of light diffusing material is formed from a combination of milky white translucent material and fluorescent material.

Preferably, the sign plate is illuminated by an illumination source directed to the rear surface of the sign plate.

Preferably, the illumination source comprises one or more light emitting diodes.

Alternatively, the illumination source is chosen from the group comprising incandescent filament bulbs, fluorescent bulbs, ultraviolet bulbs, neon bulbs and electroluminescent materials.

Preferably, the indicium is an alphanumeric character.

Preferably, the alphanumeric characters are black.

According to a second aspect of the present invention there is provided a sign plate for use as a number plate on a motor vehicle, said sign plate comprising: a base substrate layer of a translucent material having an indicium provided on a front surface thereof; and an opaque reflective layer applied to a rear surface of said translucent layer, wherein openings are formed in the opaque reflective layer which are dimensioned to substantially correspond with, and which are in general register with, the indicium applied to the front surface of the base substrate layer.

According to a third aspect of the present invention there is provided a method of forming a sign plate for a vehicle, the method comprising the steps of: providing a base substrate layer of a light transmitting material defining front and rear surfaces; applying an indicium defining visual matter to be communicated by the sign to the front surface of the base substrate layer; applying a translucent layer to the rear surface of the base substrate layer; applying a layer of opaque reflective material to the rear surface of the translucent material applied to the rear surface of the base substrate; wherein said layer defines openings in general register with the indicium applied to the front face of the base substrate.

Preferably, the step of applying the translucent layer involves applying the translucent layer over substantially the entire rear surface of the base substrate layer.

Optionally, an additional step of forming openings in the translucent layer is implemented before applying it to the base substrate layer.

Optionally, the step of applying an indicium defining visual matter to be communicated by the sign to the front surface of the base substrate layer is preceded by the step of applying a reflective intermediate layer between the base substrate layer and the indicium.

Optionally, the method further includes the step of applying a light diffusion layer over substantially the whole of the rear of the sign plate.

According to a fourth aspect of the present invention there is provided a method of forming a sign plate for a vehicle, the method comprising the steps of: providing a base substrate layer of translucent material defining front and rear surfaces; applying an indicium defining visual matter to be communicated by the sign to a front surface of the base substrate layer; applying a layer of opaque reflective material to a rear surface of the translucent material; wherein said layer defines openings in general register with the indicium applied to the front face of the base substrate.

Preferred features of the respective first and third aspects of the invention are as for the respective second and fourth aspects *mutatis mutandis* unless the context demands otherwise.

Unless otherwise defined, all technical terms used herein have the meaning commonly understood by a person who is skilled in the art in the field of the present invention.

Throughout the specification, unless the context demands otherwise, the terms "comprise" or "include", or variations such as "comprises" or "comprising", "includes" or "including" will be understood to imply the inclusion of a stated integer or group of integers, but not the exclusion of any other integer or group of integers.

### Detailed Description

The present invention will now be described with reference to the following examples which are provided for the purpose of illustration and are not intended to be construed as being limiting on the present invention. Reference will further be made to the accompanying drawings in which:
Fig. 1 shows a partial sectional view of a rear-illuminated sign in accordance with a first embodiment of the present invention; and
Fig. 2 shows a partial sectional view of a further rear-illuminated sign in accordance with a second embodiment of the present invention.

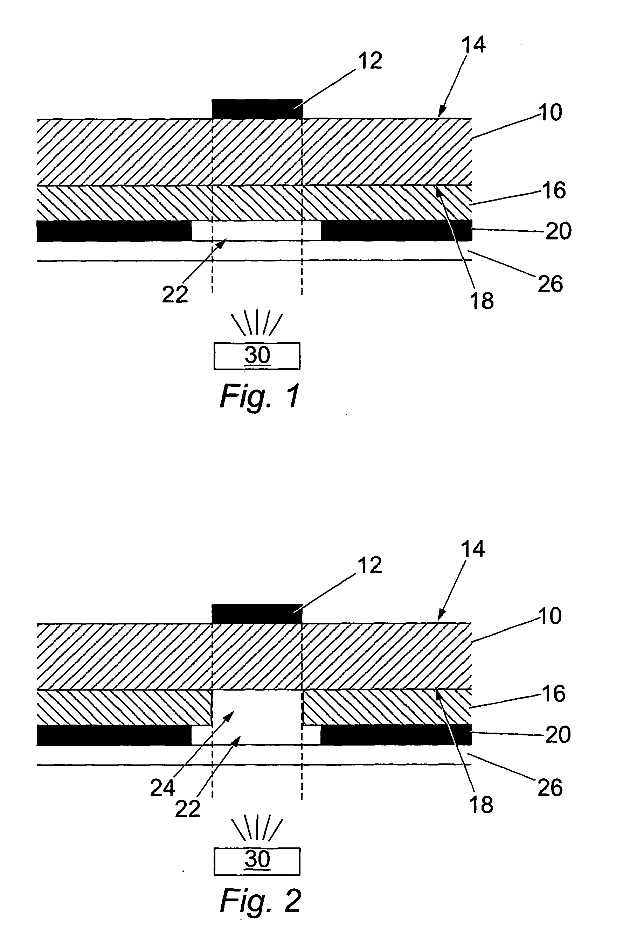

Fig. 1 shows a vehicle number plate which includes a base substrate layer 10 formed from a sheet of transparent plastics material. The base substrate layer 10 forms the base structure of the number plate. Indicia 12 comprising black, non-reflective alphanumeric characters are adhered to a front surface 14 of the base substrate layer 10 (only a portion of one character is illustrated in the figures). The front surface 14 of the base substrate layer is the surface which is visible when the number plate is mounted on a vehicle, it therefore must exhibit the vehicles registration number. The surface of the indicium 12 which is adhered to the base substrate layer 10 is white in colour and may have opaque and reflective qualities. Alternatively, an intermediate layer may be provided between the base substrate layer 10 and the indicium 12, this intermediate layer exhibiting a rearwardly directed reflective surface. This rearwardly directed surface may be white or substantially white.

A layer of translucent material 16 is applied to the rear surface 18 of the base substrate layer 10. The translucent (partially-transparent) material 16 extends over substantially the entire rear surface 18 of the base substrate layer 10. A layer of opaque (obliterating) reflective material 20 is applied to the free rear surface of the translucent layer 16. The front facing surface of the opaque reflective layer 20 is coloured white or yellow in accordance with the prescribed regulations for the visible surface of vehicle number plates as required for front and back number plates in the United Kingdom. Other colours are of course possible.

An opening 22 is formed in the opaque reflective layer 20 and is dimensioned to substantially correspond to and be in register with the indicium 12 present upon the front face of the base substrate layer 10. Hence, the opening 22 and the indicium 12 are essentially negatives of one another. The opening 22 is positioned in such a way that its cut edge or boundary is substantially opposite to, and substantially aligned with, the corresponding edge or boundary of the indicium 12.

In the particular example shown in Fig. 1, the opening 22 is dimensioned to be slightly larger (i.e. have a larger surface area) than the indicium 12 and the cut edge or boundary of the opening 22 of the opaque reflective layer 20 is not in exact alignment with the corresponding edge or boundary of the indicium. Dashed vertical lines are provided in the figure to show the relative positions of the edges or boundaries. However, it will be appreciated that the figure is not drawn to scale and has been exaggerated for the purpose of providing clarity.

In cases where the vertical dashed lines cross the plane of the opaque reflective layer 20 within the opening 22 (as is the case in Fig. 1), the gaps defined between each dashed line and its nearest opening 22 edge or border are known hereinafter as 'keylines'. The significance of the keylines is discussed in more detail below.

In use, an illumination source 30 such as a strip of light emitting diodes is located to the rear of the number plate and directed towards the rear face and the openings 22 of the opaque reflective layer 20. Other illumination sources such as incandescent bulbs, fluorescent bulbs, ultraviolet bulbs, neon bulbs and electroluminescent materials may be used as an alternative illumination source.

In order to be visible to a viewer, the light from the illumination source 30 must travel through the openings 22 provided in the opaque reflective layer 20, through the translucent layer 16, and finally, through the base substrate layer 10. The intensity of light escaping at the front surface 14 of the base substrate layer 10 varies across the surface area depending upon the construction of the various layers that make up the number plate. Light which travels directly from the illumination source 30 to the front surface 14 of the base substrate layer 10 will appear brighter than, for example, light which has been reflected from the rear surface or intermediate layer applied under the indicium 12 onto the front surface of the opaque reflective layer 20 and then back to the front surface 14 of the base substrate layer 10. Any light which is reflected before escaping from the front surface 14 of the base substrate layer 10 travels a greater distance through the various layers and thus has its intensity further diminished by means of diffusion and absorption.

A layer of light diffusing material 26 may be applied to the rear surface of the opaque reflective layer 20, at least over the exposed openings 22 and 24. The purpose of such a layer 26 is to scatter incident light received from one or more concentrated point sources in order that, from a viewer's perspective, the light output appears to be uniform. The light diffusing material may be a plastics layer 26 of milky white translucent material. Coloured light diffusing material may be used to change or intensify the colour of the light emitted from the illumination source 30.
Fluorescent material may be added to the light diffusion layer 26 to intensify certain light frequencies. Alternatively, a separate fluorescent layer may be applied to the light diffusing layer 26. The use of a fluorescent material is desirable insofar as any type of illumination source 30 can be used to activate the fluorescent material. The light emitting diodes, or other alternative illumination source 30, may be coloured and thus take the place of, or work in conjunction with, the fluorescent layer.

It will be appreciated from Fig. 1 that the only path for light to travel directly from the illumination source 30 to the front surface 14 of the base substrate layer 10 is within the keyline (i.e. vertically between each dashed line and its adjacent opening 22 edge or boundary. This direct light path which defines the extent of the keyline is present because the surface area of the indicium 12 is less than the area of the opening 22 and because the indicium 12 is substantially aligned with the opening 22.

A viewer looking at the illuminated number plate of Fig. 1 would see a bright halo surrounding each indicium 12 (corresponding to the keylines) and a silhouette which reduces in intensity with increasing distance from the indicium 12 (i.e. the letter, number or other marking on the number plate). The halo region may appear to have three-dimensional surface qualities.

The appearance of the light at the front surface 14 of the base substrate layer 10 can be manipulated to produce a variety of visual effects by means of careful selection of the materials and the particular structure of the number plate.

For example, Fig. 2 shows a number plate construction according to a second embodiment of the invention which has the effect of increasing the light intensity of the silhouette region at the front surface 14 of the base substrate layer 10 (as compared to Fig. 1). In fact, the intensity of the light in the silhouette region can be adapted to be greater than that of the halo region immediately surrounding the indicium 12 (i.e. the reverse effect to that produced by the construction of Fig. 1). This is achieved by forming openings 24 in the translucent layer 16 with the result that light from the illumination source 30 which passes directly through the openings 24 suffers from the effects of diffusion and scattering to a lesser degree. It will be noted that the opening 24 formed in the translucent layer 16 shown in Fig. 2 is dimensioned to exactly correspond with the edge or border of the indicium 12 and is aligned exactly therewith. Accordingly, when viewed face on, the translucent layer 16 covers the keyline gap and therefore light which travels vertically from the illumination source 30 within the keyline passes through the translucent layer 16 before reaching the front surface 14 of the base substrate layer 10.

Depending upon the thickness of the base substrate layer 10, to ensure that keylines are not visible from an acute angle, it may be necessary to form openings 24 in the translucent layer 16 which are smaller that those shown in Fig. 2. For example, in order to ensure that keylines remain invisible at a viewing angle of up to 45 degrees from face on, the edges or boundaries of the openings 24 would (i) be formed within the dashed lines in Fig. 2; and (ii) be formed at a distance from the dashed lines which is at least equal to the thickness of the base substrate layer 10.

It will be appreciated that the relative intensity of light escaping from the front surface 14 (i.e. within the silhouette region) of the base substrate layer 10 will vary depending upon the size of the openings 24 formed in the translucent layer 16.

Further visual effects can be produced by varying both the dimensions and relative positions (with respect to the indicium 12) of openings 22 and 24 and the thickness and/or translucency of the translucent layer 16.

A particularly suitable translucent material is manufactured by 3M under the trade name Diamond Grade™ and is available in both white and yellow thus conforming to vehicle number plate requirements. Although it is a primarily reflective material, 3M's Diamond Grade™ reflective sheeting is made up of a plurality of hexagonal elements placed in a side-by-side arrangement, the common boundaries of which are partially light transmitting.

It will be appreciated that manipulation of these variables affects the relative intensities, positions and sizes of the halo regions (i.e. the regions immediately surrounding the indicium 12) and silhouette regions (i.e. the regions surrounding the halo regions). In summary, with regard to intensity, a smaller opening 24 formed within the umbrella of the indicium 12 corresponds to a less intense (and smaller) silhouette region and a thinner (or more transparent) translucent layer 16 corresponds to a more intense halo region. With regard to the positioning of the halo and silhouette regions, these can be offset from centre by shifting the relative alignment of the openings 22 and 24 with respect to the indicium 12. With regard to the size of the halo region, this is determined by the width of the keyline gap.

It will appreciated from the foregoing that the surface area of the indicium 12 may also be equal to or greater than (as well as smaller than) the area of the corresponding opening 22 formed in the opaque reflective layer 20. However, if a keyline is desired, the relative alignment of the edges or borders of the opening 22 and the indicium 12 would have to be shifted to produce this and the resultant halo region. Of course, in such a circumstance, the keyline (and thus the halo) would not extend around the entire periphery of each indicium 12.

Further layers of material may be incorporated into the number plate. For example, a protective layer of transparent plastics material may be mounted over the indicium 12 on the front surface 14 of the base substrate layer 10 to act as a protective layer.

Regardless of the configuration of layers chosen to make up the number plate, of paramount importance is the fundamental issue of conformity (within the United Kingdom at least) with British Standard BS AU 145d. Accordingly, the keyline(s) must not be visible until the number plate is illuminated. In this regard, it will be appreciated from a review of the figures and from the foregoing description that the keyline(s) are always hidden from view by the translucent layer 16 when the number plate is not illuminated.

The diverse array of lighting effects made possible by the present invention may be particularly amenable for use in the production of distinctive number plates for taxis or other private hire vehicles which are envisioned in a recently published DVLA consultation paper.

Although the present invention has been described with reference to specific embodiments, it should be understood that the invention as claimed should not be unduly limited to these specific embodiments. Modifications and improvements may be made without departing from the scope of the present invention. For example, the rear face of the indicium 12 (i.e. the face which contacts the base substrate layer 10) may be selected to have varying degrees of reflectivity or opacity to thus control the intensity of the silhouette region. Similarly, the front facing surface of the opaque reflective layer 20 may be adapted to have varying degrees of reflectivity or opacity. Moreover, the reflectivity or opacity of these surfaces may be varied over their surface areas to produce asymmetric silhouette regions.

Although the primary purpose of the present invention is to illuminate the alphanumeric characters on a number plate, it is of course equally applicable for illuminating other markings on a number plate (i.e. nationality indicators, manufacturer's trade marks etc.). Of course, the application of the present invention need not be restricted to the number plate industry and would be equally applicable for use in conjunction with other forms of signs.

The base substrate layer 10 could be translucent thus dispensing with the need for an additional translucent layer 16 in the first embodiment of the present invention.

The light diffusing layer 26 may be adapted to have graduated light diffusing properties and/or gradual colour changes across its length to thus produce interesting visual effects at the front surface 14 of the base substrate layer 10.

## Claims

1. A sign plate for use as a number plate on a motor vehicle, said sign plate comprising:
a base substrate layer 10 of a light transmitting material having an indicium 12 provided on a front surface 14 thereof;
a layer of translucent material applied 16 applied to a rear surface 18 of the base substrate layer 10; and
an opaque reflective layer 20 applied to the free surface of said translucent layer 16,
wherein openings 22 are formed in the opaque reflective layer 20 which are dimensioned to substantially correspond with, and which are in general register with, the indicium 12 applied to the front surface 14 of the base substrate layer 10.

2. A sign plate as claimed in claim 1, wherein the indicium 12 applied to the front surface 14 of the base substrate 10 has rearwardly directed opaque reflective surfaces.

3. A sign plate as claimed in claim 1 or 2,
wherein a white reflective layer is provided as an intermediate layer between the base substrate layer 10 and the indicium 12.

4. A sign plate as claimed in any preceding claim,
wherein the light transmitting material is formed from a transparent plastics material.

5. A sign plate as claimed in claim 4, wherein the transparent plastics material is acrylic.

6. A sign plate as claimed in any preceding claim,
wherein the front facing surface of the opaque reflective layer 20 is coloured white.

7. A sign plate as claimed in any of claims 1 to 5, wherein the front facing surface of the opaque reflective layer 20 is coloured yellow.

8. A sign plate as claimed in any preceding claim,
wherein the surface area of the indicium 12 is less than the area of the corresponding opening 22 formed in the opaque reflective layer 20.

9. A sign plate as claimed in any of claims 1 to 7, wherein the surface area of the indicium 12 is greater than or equal to the area of the corresponding opening 22 formed in the opaque reflective layer 20.

10. A sign plate as claimed in any preceding claim,
wherein the indicium 12 and the corresponding openings 22 in the opaque reflective layer 20 are not in exact alignment with respect to each other.

11. A sign plate as claimed in any preceding claim,
wherein the layer of translucent material 16 extends continuously over substantially the entire rear surface of the base substrate layer 10.

12. A sign plate as claimed in any of claims 1 to 10, wherein openings 24 are formed in the layer of translucent material 16, the boundaries of which are dimensioned to exactly correspond with those of the indicium 12 and which are positioned in exact alignment with those of the indicium 12.

13. A sign plate as claimed in any of claims 1 to 10, wherein openings 24 are formed in the layer of translucent material, the boundaries of which are dimensioned to be smaller than those of the indicium 12 and which are positioned within the umbrella of the indicium 12.

14. A sign plate as claimed in any preceding claim,
wherein a further protective layer of transparent plastics material covers the indicium 12 on the front surface 14 of the base substrate layer 10.

15. A sign plate as claimed in any preceding claim,
wherein a layer of light diffusing material 26 is applied to the rear surface of the opaque reflective layer 20.

16. A sign plate as claimed in claim 15, wherein the layer of light diffusing material 26 is formed from a milky white translucent material.

17. A sign plate as claimed in claim 15, wherein a layer of fluorescent material acts as the light diffusing layer 26.

18. A sign plate as claimed in claim 15, wherein the layer of light diffusing material 26 is formed from a combination of milky white translucent material and fluorescent material.

19. A sign plate as claimed in any preceding claim,
wherein the sign plate is illuminated by an illumination source 30 directed to the rear surface of the sign plate.

20. A sign plate as claimed in claim 19, wherein the illumination source 30 comprises one or more light emitting diodes.

21. A sign plate as claimed in claim 19, wherein the illumination source 30 is chosen from the group comprising incandescent filament bulbs, fluorescent bulbs, ultraviolet bulbs, neon bulbs and electroluminescent materials.

22. A sign plate as claimed in any preceding claim,
wherein the indicium 12 is an alphanumeric character.

23. A sign plate as claimed in claim 22, wherein the alphanumeric characters are black.

24. A sign plate for use as a number plate on a motor vehicle, said sign plate comprising:
a base substrate layer 10 of a translucent material having an indicium 12 provided on a front surface 14 thereof; and
an opaque reflective layer 20 applied to a rear surface of said translucent layer 10,
wherein openings 22 are formed in the opaque reflective layer 20 which are dimensioned to substantially correspond with, and which are in general register with, the indicium 12 applied to the front surface 14 of the base substrate layer 10.

25. A sign plate as claimed in claim 24, wherein the front facing surface of the opaque reflective layer 20 is coloured white.

26. A sign plate as claimed in claim 24, wherein the front facing surface of the opaque reflective layer 20 is coloured yellow.

27. A sign plate as claimed in any of claims 24 to 26, wherein the surface area of the indicium 12 is less than the area of the corresponding opening 22 formed in the opaque reflective layer 20.

28. A sign plate as claimed in any of claims 24 to 26, wherein the surface area of the indicium 12 is greater than or equal to the area of the corresponding opening 22 formed in the opaque reflective layer 20.

29. A sign plate as claimed in any of claims 24 to 26, wherein the indicium 12 and the corresponding openings 22 in the opaque reflective layer 20 are not in exact alignment with respect to each other.

30. A sign plate as claimed in any of claims 24 to 29, wherein a protective layer of transparent plastics material covers the indicium 12 on the front surface 14 of the base substrate layer 10.

31. A sign plate as claimed in any of claims 24 to 30, wherein a layer of light diffusing material 26 is applied to the rear surface of the opaque reflective layer 20.

32. A sign plate as claimed in claim 31, wherein the layer of light diffusing material 26 is formed from a milky white translucent material.

33. A sign plate as claimed in claim 31, wherein a layer of fluorescent material acts as the light diffusing layer 26.

34. A sign plate as claimed in claim 31, wherein the layer of light diffusing material 26 is formed from a combination of milky white translucent material and fluorescent material.

35. A sign plate as claimed in any of claims 24 to 34, wherein the sign plate is illuminated by an illumination source 30 directed to the rear surface of the sign plate.

36. A sign plate as claimed in claim 35, wherein the illumination source 30 comprises one or more light emitting diodes.

37. A sign plate as claimed in claim 35, wherein the illumination source 30 is chosen from the group comprising incandescent filament bulbs, fluorescent bulbs, ultraviolet bulbs, neon bulbs and electroluminescent materials.

38. A sign plate as claimed in any of claims 24 to 37, wherein the indicium 12 is an alphanumeric character.

39. A sign plate as claimed in claim 38, wherein the alphanumeric characters are black.

40. A method of forming a sign plate for a vehicle, the method comprising the steps of:
- providing a base substrate layer 10 of a light transmitting material defining front and rear surfaces,
- applying an indicium 12 defining visual matter to be communicated by the sign to the front surface 14 of the base substrate layer 10,
- applying a translucent layer 16 to the rear surface of the base substrate layer 10,
- applying a layer of opaque reflective material 20 to the rear surface of the translucent material 16 applied to the rear surface of the base substrate 10, wherein said layer defines openings 22 in general register with the indicium 12 applied to the front face 14 of the base substrate 10.

41. A method of forming a sign plate for a vehicle as claimed in claim 40, wherein the step of applying the translucent layer 16 involves applying the translucent layer over substantially the entire rear surface of the base substrate layer 10.

42. A method of forming a sign plate for a vehicle as claimed in claim 40, wherein an additional step of forming openings 24 in the translucent layer 16 is implemented before applying it to the base substrate layer 10.

43. A method of forming a sign plate for a vehicle as claimed in any of claims 40 to 42, wherein the step of applying an indicium 12 defining visual matter to be communicated by the sign to the front surface 14 of the base substrate layer 10 is preceded by the step of applying a reflective intermediate layer between the base substrate layer 10 and the indicium 12.

44. A method of forming a sign plate for a vehicle as claimed in any of claims 40 to 43, wherein the method further includes the step of applying a light diffusion layer 26 over substantially the whole of the rear of the sign plate.

45. A method of forming a sign plate for a vehicle, the method comprising the steps of:
- providing a base substrate layer 10 of translucent material defining front 14 and rear surfaces,
- applying an indicium 12 defining visual matter to be communicated by the sign to a front surface 14 of the base substrate layer 10,
- applying a layer of opaque reflective material 20 to a rear surface of the translucent material, wherein said layer defines openings 22 in general register with the indicium 12 applied to the front face 14 of the base substrate.

46. A method of forming a sign plate for a vehicle as claimed in claim 45, wherein the step of applying an indicium 12 defining visual matter to be 14 communicated by the sign to the front surface 14 of the base substrate layer 10 is preceded by the step of applying a reflective intermediate layer between the base substrate layer 10 and the indicium 12.

47. A method of forming a sign plate for a vehicle as claimed in claim 45 or 46, wherein the method further includes the step of applying a light diffusion layer 26 over substantially the whole of the rear of the sign plate.

## Patentansprüche

1. Eine Bezeichnungsplatte zur Verwendung als Nummernschild an einem Kraftfahrzeug, wobei die Bezeichnungsplatte Folgendes beinhaltet:
eine Basissubstratschicht 10 aus einem lichtdurchlässigen Material mit einem Zeichen 12, das auf einer vorderen Oberfläche 14 davon bereitgestellt ist;
eine Schicht aus transluzentem Material 16, die an einer hinteren Oberfläche 18 der Basissubstratschicht 10 angebracht ist; und
eine opake reflektierende Schicht 20, die an der freien Oberfläche der transluzenten Schicht 16 angebracht ist,
wobei in der opaken reflektierenden Schicht 20 Öffnungen 22 gebildet sind, die bemessen sind, um im Wesentlichen dem Zeichen 12, das an der vorderen Oberfläche 14 der Basissubstratschicht 10 angebracht ist, zu entsprechen und damit im Allgemeinen deckungsgleich zu sein.

2. Bezeichnungsplatte gemäß Anspruch 1, wobei das Zeichen 12, das an der vorderen Oberfläche 14 des Basissubstrats 10 angebracht ist, nach hinten gerichtete opake reflektierende Oberflächen aufweist.

3. Bezeichnungsplatte gemäß Anspruch 1 oder 2, wobei eine weiße reflektierende Schicht als Zwischenschicht zwischen der Basissubstratschicht 10 und dem Zeichen 12 bereitgestellt ist.

4. Bezeichnungsplatte gemäß einem der vorhergehenden Ansprüche, wobei das lichtdurchlässige Material aus einem transparenten Kunststoffmaterial gebildet ist.

5. Bezeichnungsplatte gemäß Anspruch 4, wobei das transparente Kunststoffmaterial Acryl ist.

6. Bezeichnungsplatte gemäß einem der vorhergehenden Ansprüche, wobei die nach vorne weisende Oberfläche der opaken reflektierenden Schicht 20 die Farbe weiß aufweist.

7. Bezeichnungsplatte gemäß einem der Ansprüche 1 bis 5,
wobei die nach vorne weisende Oberfläche der opaken reflektierenden Schicht 20 die Farbe gelb aufweist.

8. Bezeichnungsplatte gemäß einem der vorhergehenden Ansprüche, wobei der Oberflächenbereich des Zeichens 12 kleiner als der Bereich der entsprechenden Öffnung 22 ist, die in der opaken reflektierenden Schicht 20 gebildet ist.

9. Bezeichnungsplatte gemäß einem der Ansprüche 1 bis 7,
wobei der Oberflächenbereich des Zeichens 12 größer oder gleich dem Bereich der entsprechenden Öffnung 22 ist, die in der opaken reflektierenden Schicht 20 gebildet ist.

10. Bezeichnungsplatte gemäß einem der vorhergehenden Ansprüche, wobei das Zeichen 12 und die entsprechenden Öffnungen 22 in der opaken reflektierenden Schicht 20 nicht exakt aufeinander ausgerichtet sind.

11. Bezeichnungsplatte gemäß einem der vorhergehenden Ansprüche, wobei sich die Schicht aus transluzentem Material 16 durchgehend über im Wesentlichen die gesamte hintere Oberfläche der Basissubstratschicht 10 erstreckt.

12. Bezeichnungsplatte gemäß einem der Ansprüche 1 bis 10,
wobei in der Schicht aus transluzentem Material 16 Öffnungen 24 gebildet sind, deren Ränder bemessen sind, um exakt denen des Zeichens 12 zu entsprechen, und die in exakter Ausrichtung auf die des Zeichens 12 positioniert sind.

13. Bezeichnungsplatte gemäß einem der Ansprüche 1 bis 10,
wobei in der Schicht aus transluzentem Material Öffnungen 24 gebildet sind, deren Ränder bemessen sind, um kleiner als die des Zeichens 12 zu sein, und die innerhalb des Schirms des Zeichens 12 positioniert sind.

14. Bezeichnungsplatte gemäß einem der vorhergehenden Ansprüche, wobei eine weitere schützende Schicht aus transparentem Kunststoffmaterial das Zeichen 12 auf der vorderen Oberfläche 14 der Basissubstratschicht 10 bedeckt.

15. Bezeichnungsplatte gemäß einem der vorhergehenden Ansprüche, wobei auf der hinteren Oberfläche der opaken reflektierenden Schicht 20 eine Schicht aus lichtstreuendem Material 26 angebracht ist.

16. Bezeichnungsplatte gemäß Anspruch 15, wobei die Schicht aus lichtstreuendem Material 26 aus einem milchig weißen transluzenten Material gebildet ist.

17. Bezeichnungsplatte gemäß Anspruch 15, wobei eine Schicht aus fluoreszierendem Material als die lichtstreuende Schicht 26 wirkt.

18. Bezeichnungsplatte gemäß Anspruch 15, wobei die Schicht aus lichtstreuendem Material 26 aus einer Kombination aus einem milchig weißen transluzenten Material und einem fluoreszierenden Material gebildet ist.

19. Bezeichnungsplatte gemäß einem der vorhergehenden Ansprüche, wobei die Bezeichnungsplatte von einer Beleuchtungsquelle 30, die auf die hintere Oberfläche der Bezeichnungsplatte gerichtet ist, beleuchtet wird.

20. Bezeichnungsplatte gemäß Anspruch 19, wobei die Beleuchtungsquelle 30 eine oder mehrere Leuchtdioden beinhaltet.

21. Bezeichnungsplatte gemäß Anspruch 19, wobei die Beleuchtungsquelle 30 aus der Gruppe, die weißglühende Glühlampen, Fluoreszenzlampen, Ultraviolettlampen, Neonlampen und elektrolumineszente Materialien beinhaltet, ausgewählt ist.

22. Bezeichnungsplatte gemäß einem der vorhergehenden Ansprüche, wobei das Zeichen 12 ein alphanumerisches Symbol ist.

23. Bezeichnungsplatte gemäß Anspruch 22, wobei die alphanumerischen Symbole schwarz sind.

24. Eine Bezeichnungsplatte zur Verwendung als Nummernschild an einem Kraftfahrzeug, wobei die Bezeichnungsplatte Folgendes beinhaltet:
eine Basissubstratschicht 10 aus einem transluzenten Material mit einem Zeichen 12, das auf einer vorderen Oberfläche 14 davon bereitgestellt ist; und
eine opake reflektierende Schicht 20, die an einer hinteren Oberfläche der transluzenten Schicht 10 angebracht ist,
wobei in der opaken reflektierenden Schicht 20 Öffnungen 22 gebildet sind, die bemessen sind, um im Wesentlichen dem Zeichen 12, das an der vorderen Oberfläche 14 der Basissubstratschicht 10 angebracht ist, zu entsprechen und damit im Allgemeinen deckungsgleich zu sein.

25. Bezeichnungsplatte gemäß Anspruch 24, wobei die nach vorne weisende Oberfläche der opaken reflektierenden Schicht 20 die Farbe weiß aufweist.

26. Bezeichnungsplatte gemäß Anspruch 24, wobei die nach vorne weisende Oberfläche der opaken reflektierenden Schicht 20 die Farbe gelb aufweist.

27. Bezeichnungsplatte gemäß einem der Ansprüche 24 bis 26,
wobei der Oberflächenbereich des Zeichens 12 kleiner als der Bereich der entsprechenden Öffnung 22 ist, die in der opaken reflektierenden Schicht 20 gebildet ist.

28. Bezeichnungsplatte gemäß einem der Ansprüche 24 bis 26,
wobei der Oberflächenbereich des Zeichens 12 größer oder gleich dem Bereich der entsprechenden Öffnung 22 ist, die in der opaken reflektierenden Schicht 20 gebildet ist.

29. Bezeichnungsplatte gemäß einem der Ansprüche 24 bis 26,
wobei das Zeichen 12 und die entsprechenden Öffnungen 22 in der opaken reflektierenden Schicht 20 nicht exakt aufeinander ausgerichtet sind.

30. Bezeichnungsplatte gemäß einem der Ansprüche 24 bis 29,
wobei eine schützende Schicht aus transparentem Kunststoffmaterial das Zeichen 12 auf der vorderen Oberfläche 14 der Basissubstratschicht 10 bedeckt.

31. Bezeichnungsplatte gemäß einem der Ansprüche 24 bis 30,
wobei auf der hinteren Oberfläche der opaken reflektierenden Schicht 20 eine Schicht aus lichtstreuendem Material 26 angebracht ist.

32. Bezeichnungsplatte gemäß Anspruch 31, wobei die Schicht aus lichtstreuendem Material 26 aus einem milchig weißen transluzenten Material gebildet ist.

33. Bezeichnungsplatte gemäß Anspruch 31, wobei eine Schicht aus fluoreszierendem Material als die lichtstreuende Schicht 26 wirkt.

34. Bezeichnungsplatte gemäß Anspruch 31, wobei die Schicht aus lichtstreuendem Material 26 aus einer Kombination aus einem milchig weißen transluzenten Material und einem fluoreszierenden Material gebildet ist.

35. Bezeichnungsplatte gemäß einem der Ansprüche 24 bis 34,
wobei die Bezeichnungsplatte von einer Beleuchtungsquelle 30, die auf die hintere Oberfläche der Bezeichnungsplatte gerichtet ist, beleuchtet wird.

36. Bezeichnungsplatte gemäß Anspruch 35, wobei die Beleuchtungsquelle 30 eine oder mehrere Leuchtdioden beinhaltet.

37. Bezeichnungsplatte gemäß Anspruch 35, wobei die Beleuchtungsquelle 30 aus der Gruppe, die weißglühende Glühlampen, Fluoreszenzlampen, Ultraviolettlampen, Neonlampen und elektrolumineszente Materialien beinhaltet, ausgewählt ist.

38. Bezeichnungsplatte gemäß einem der Ansprüche 24 bis 37,
wobei das Zeichen 12 ein alphanumerisches Symbol ist.

39. Bezeichnungsplatte gemäß Anspruch 38, wobei die alphanumerischen Symbole schwarz sind.

40. Ein Verfahren zum Bilden einer Bezeichnungsplatte für ein Fahrzeug, wobei das Verfahren die folgenden Schritte beinhaltet:
- Bereitstellen einer Basissubstratschicht 10 aus einem lichtdurchlässigen Material, die eine vordere und hintere Oberfläche definiert,
- Anbringen eines Zeichens 12, das eine visuelle Sache definiert, die von der Bezeichnung übermittelt werden soll, an der vorderen Oberfläche 14 der Basissubstratschicht 10,
- Anbringen einer transluzenten Schicht 16 an der hinteren Oberfläche der Basissubstratschicht 10,
- Anbringen einer Schicht aus opakem reflektierendem Material 20 an der hinteren Oberfläche des transluzenten Materials 16, das an der hinteren Oberfläche des Basissubstrats 10 angebracht ist, wobei die Schicht Öffnungen 22 definiert, die mit dem Zeichen 12, das auf der vorderen Fläche 14 des Basissubstrats 10 angebracht ist, im Allgemeinen deckungsgleich sind.

41. Verfahren zum Bilden einer Bezeichnungsplatte für ein Fahrzeug gemäß Anspruch 40, wobei der Schritt des Anbringens der transluzenten Schicht 16 das Anbringen der transluzenten Schicht über im Wesentlichen der gesamten hinteren Oberfläche der Basissubstratschicht 10 einschließt.

42. Verfahren zum Bilden einer Bezeichnungsplatte für ein Fahrzeug gemäß Anspruch 40, wobei ein zusätzlicher Schritt des Bildens von Öffnungen 24 in der transluzenten Schicht 16 ausgeführt wird, bevor sie an der Basissubstratschicht 10 angebracht wird.

43. Verfahren zum Bilden einer Bezeichnungsplatte für ein Fahrzeug gemäß einem der Ansprüche 40 bis 42, wobei dem Schritt des Anbringens eines Zeichens 12, das eine visuelle Sache definiert, die von der Bezeichnung übermittelt werden soll, an der vorderen Oberfläche 14 der Basissubstratschicht 10 der Schritt des Anbringens einer reflektierenden Zwischenschicht zwischen der Basissubstratschicht 10 und dem Zeichen 12 vorausgeht.

44. Verfahren zum Bilden einer Bezeichnungsplatte für ein Fahrzeug gemäß einem der Ansprüche 40 bis 43, wobei das Verfahren ferner den Schritt des Anbringens einer lichtstreuenden Schicht 26 über im Wesentlichen der ganzen Rückseite der Bezeichnungsplatte umfasst.

45. Ein Verfahren zum Bilden einer Bezeichnungsplatte für ein Fahrzeug, wobei das Verfahren die folgenden Schritte beinhaltet:
- Bereitstellen einer Basissubstratschicht 10 aus einem transluzenten Material, die eine vordere 14 und hintere Oberfläche definiert,
- Anbringen eines Zeichens 12, das eine visuelle Sache definiert, die von der Bezeichnung übermittelt werden soll, an einer vorderen Oberfläche 14 der Basissubstratschicht 10,
- Anbringen einer Schicht aus opakem reflektierendem Material 20 an einer hinteren Oberfläche des transluzenten Materials, wobei die Schicht Öffnungen 22 definiert, die mit dem Zeichen 12, das an der vorderen Fläche 14 des Basissubstrats angebracht ist, im Allgemeinen deckungsgleich sind.

46. Verfahren zum Bilden einer Bezeichnungsplatte für ein Fahrzeug gemäß Anspruch 45, wobei dem Schritt des Anbringens eines Zeichens 12, das eine visuelle Sache definiert, die von der Bezeichnung übermittelt werden soll, an der vorderen Oberfläche 14 der Basissubstratschicht 10 der Schritt des Anbringens einer reflektierenden Zwischenschicht zwischen der Basissubstratschicht 10 und dem Zeichen 12 vorausgeht.

47. Verfahren zum Bilden einer Bezeichnungsplatte für ein Fahrzeug gemäß Anspruch 45 oder 46, wobei das Verfahren ferner den Schritt des Anbringens einer lichtstreuenden Schicht 26 über im Wesentlichen der ganzen Rückseite der Bezeichnungsplatte umfasst.

## Revendications

1. Une plaque de signalisation destinée à être utilisée comme plaque d'immatriculation sur un véhicule motorisé, ladite plaque de signalisation comprenant :
une couche formant substrat de base 10 d'un matériau émetteur de lumière ayant une marque 12 fournie sur une surface avant 14 de celle-ci ;
une couche de matériau translucide 16 appliquée sur une surface arrière 18 de la couche formant substrat de base 10 ; et
une couche réfléchissante opaque 20 appliquée sur la surface libre de ladite couche translucide 16,
où des ouvertures 22 sont formées dans la couche réfléchissante opaque 20, lesquelles sont dimensionnées pour correspondre substantiellement à, et lesquelles sont en générale calées sur, la marque 12 appliquée sur la surface avant 14 de la couche formant substrat de base 10.

2. Une plaque de signalisation telle que revendiquée dans la revendication 1, où la marque 12 appliquée sur la surface avant 14 du substrat de base 10 présente des surfaces réfléchissantes opaques dirigées vers l'arrière.

3. Une plaque de signalisation telle que revendiquée dans la revendication 1 ou la revendication 2, où une couche réfléchissante blanche est fournie en tant que couche intermédiaire entre la couche formant substrat de base 10 et la marque 12.

4. Une plaque de signalisation telle que revendiquée dans n'importe quelle revendication précédente, où le matériau émetteur de lumière est formé à partir d'un matériau plastique transparent.

5. Une plaque de signalisation telle que revendiquée dans la revendication 4, où le matériau plastique transparent est de l'acrylique.

6. Une plaque de signalisation telle que revendiquée dans n'importe quelle revendication précédente, où la surface faisant face vers l'avant de la couche réfléchissante opaque 20 est de couleur blanche.

7. Une plaque de signalisation telle que revendiquée dans n'importe lesquelles des revendications 1 à 5, où la surface faisant face vers l'avant de la couche réfléchissante opaque 20 est de couleur jaune.

8. Une plaque de signalisation telle que revendiquée dans n'importe quelle revendication précédente, où la superficie de la marque 12 est inférieure à l'aire de l'ouverture correspondante 22 formée dans la couche réfléchissante opaque 20.

9. Une plaque de signalisation telle que revendiquée dans n'importe lesquelles des revendications 1 à 7, où la superficie de la marque 12 est supérieure ou égale à la zone de l'ouverture correspondante 22 formée dans la couche réfléchissante opaque 20.

10. Une plaque de signalisation telle que revendiquée dans n'importe quelle revendication précédente, où la marque 12 et les ouvertures correspondantes 22 dans la couche réfléchissante opaque 20 ne se trouvent pas dans un alignement exact l'une par rapport à l'autre.

11. Une plaque de signalisation telle que revendiquée dans n'importe quelle revendication précédente, où la couche de matériau translucide 16 s'étend de façon continue par-dessus substantiellement la surface arrière tout entière de la couche formant substrat de base 10.

12. Une plaque de signalisation telle que revendiquée dans n'importe lesquelles des revendications 1 à 10, où des ouvertures 24 sont formées dans la couche de matériau translucide 16, dont les limites sont dimensionnées pour correspondre exactement à celles de la marque 12 et qui sont positionnées dans un alignement exact avec celles de la marque 12.

13. Une plaque de signalisation telle que revendiquée dans n'importe lesquelles des revendications 1 à 10, où des ouvertures 24 sont formées dans la couche de matériau translucide, dont les limites sont dimensionnées pour être plus petites que celles de la marque 12 et qui sont positionnées sous l'ombrelle de la marque 12.

14. Une plaque de signalisation telle que revendiquée dans n'importe quelle revendication précédente, où une couche protectrice supplémentaire de matériau plastique transparent recouvre la marque 12 sur la surface avant 14 de la couche formant substrat de base 10.

15. Une plaque de signalisation telle que revendiquée dans n'importe quelle revendication précédente, où une couche de matériau diffusant la lumière 26 est appliquée sur la surface arrière de la couche réfléchissante opaque 20.

16. Une plaque de signalisation telle que revendiquée dans la revendication 15, où la couche de matériau diffusant la lumière 26 est formée à partir d'un matériau translucide blanc laiteux.

17. Une plaque de signalisation telle que revendiquée dans la revendication 15, où une couche de matériau fluorescent fait office de couche diffusant la lumière 26.

18. Une plaque de signalisation telle que revendiquée dans la revendication 15, où la couche de matériau diffusant la lumière 26 est formée à partir d'une combinaison de matériau translucide blanc laiteux et de matériau fluorescent.

19. Une plaque de signalisation telle que revendiquée dans n'importe quelle revendication précédente, où la plaque de signalisation est illuminée par une source d'illumination 30 dirigée vers la surface arrière de la plaque de signalisation.

20. Une plaque de signalisation telle que revendiquée dans la revendication 19, où la source d'illumination 30 comprend une
ou plusieurs diodes à luminescence.

21. Une plaque de signalisation telle que revendiquée dans la revendication 19, où la source d'illumination 30 est choisie dans le groupe comprenant des ampoules à filament incandescent, des ampoules fluorescentes, des ampoules ultraviolettes, des ampoules au néon et des matériaux électroluminescents.

22. Une plaque de signalisation telle que revendiquée dans n'importe quelle revendication précédente, où la marque 12 est un caractère alphanumérique.

23. Une plaque de signalisation telle que revendiquée dans la revendication 22, où les caractères alphanumériques sont noirs.

24. Une plaque de signalisation destinée à être utilisée comme plaque d'immatriculation sur un véhicule motorisé, ladite plaque de signalisation comprenant :
une couche formant substrat de base 10 d'un matériau translucide ayant une marque 12 fournie sur une surface avant 14 de celle-ci ; et
une couche réfléchissante opaque 20 appliquée sur une surface arrière de ladite couche translucide 10,
où des ouvertures 22 sont formées dans la couche réfléchissante opaque 20, lesquelles sont dimensionnées pour correspondre substantiellement à, et lesquelles sont en générale calées sur, la marque 12 appliquée sur la surface avant 14 de la couche formant substrat de base 10.

25. Une plaque de signalisation telle que revendiquée dans la revendication 24, où la surface faisant face vers l'avant de la couche réfléchissante opaque 20 est de couleur blanche.

26. Une plaque de signalisation telle que revendiquée dans la revendication 24, où la surface faisant face vers l'avant de la couche réfléchissante opaque 20 est de couleur jaune.

27. Une plaque de signalisation telle que revendiquée dans n'importe lesquelles des revendications 24 à 26, où la superficie de la marque 12 est inférieure à la zone de l'ouverture correspondante 22 formée dans la couche réfléchissante opaque 20.

28. Une plaque de signalisation telle que revendiquée dans n'importe lesquelles des revendications 24 à 26, où la superficie de la marque 12 est supérieure ou égale à la zone de l'ouverture correspondante 22 formée dans la couche réfléchissante opaque 20.

29. Une plaque de signalisation telle que revendiquée dans n'importe lesquelles des revendications 24 à 26, où la marque 12 et les ouvertures correspondantes 22 dans la couche réfléchissante opaque 20 ne se trouvent pas dans un alignement exact l'une par rapport à l'autre.

30. Une plaque de signalisation telle que revendiquée dans n'importe lesquelles des revendications 24 à 29, où une couche protectrice de matériau plastique transparent recouvre la marque 12 sur la surface avant 14 de la couche formant substrat de base 10.

31. Une plaque de signalisation telle que revendiquée dans n'importe lesquelles des revendications 24 à 30, où une couche de matériau diffusant la lumière 26 est appliquée sur la surface arrière de la couche réfléchissante opaque 20.

32. Une plaque de signalisation telle que revendiquée dans la revendication 31, où la couche de matériau diffusant la lumière 26 est formée à partir d'un matériau translucide blanc laiteux.

33. Une plaque de signalisation telle que revendiquée dans la revendication 31, où une couche de matériau fluorescent fait office de couche diffusant la lumière 26.

34. Une plaque de signalisation telle que revendiquée dans la revendication 31, où la couche de matériau diffusant la lumière 26 est formée à partir d'une combinaison de matériau translucide blanc laiteux et de matériau fluorescent.

35. Une plaque de signalisation telle que revendiquée dans n'importe lesquelles des revendications 24 à 34, où la plaque de signalisation est illuminée par une source d'illumination 30 dirigée vers la surface arrière de la plaque de signalisation.

36. Une plaque de signalisation telle que revendiquée dans la revendication 35, où la source d'illumination 30 comprend une
ou plusieurs diodes électroluminescentes.

37. Une plaque de signalisation telle que revendiquée dans la revendication 35, où la source d'illumination 30 est choisie dans le groupe comprenant des ampoules à filament incandescent, des ampoules fluorescentes, des ampoules ultraviolettes, des ampoules au néon et des matériaux électroluminescents.

38. Une plaque de signalisation telle que revendiquée dans n'importe lesquelles des revendications 24 à 37, où la marque 12 est un caractère alphanumérique.

39. Une plaque de signalisation telle que revendiquée dans la revendication 38, où les caractères alphanumériques sont noirs.

40. Une méthode pour former une plaque de signalisation destinée à un véhicule, la méthode comprenant les étapes consistant à :
- fournir une couche formant substrat de base 10 d'un matériau émetteur de lumière définissant des surfaces avant et arrière,
- appliquer une marque 12 définissant une matière visuelle devant être communiquée par la signalisation sur la surface avant 14 de la couche formant substrat de base 10,
- appliquer une couche translucide 16 sur la surface arrière de la couche formant substrat de base 10,
- appliquer une couche de matériau réfléchissant opaque 20 sur la surface arrière du matériau translucide 16 appliqué sur la surface arrière du substrat de base 10, où ladite couche définit des ouvertures 22 en général calées sur la marque 12 appliquée sur la face avant 14 du substrat de base 10.

41. Une méthode pour former une plaque de signalisation destinée à un véhicule telle que revendiquée dans la revendication 40,
où l'étape consistant à appliquer la couche translucide 16 exige d'appliquer la couche translucide par-dessus substantiellement la surface arrière tout entière de la couche formant substrat de base 10.

42. Une méthode pour former une plaque de signalisation destinée à un véhicule telle que revendiquée dans la revendication 40,
où une étape additionnelle consistant à former des ouvertures 24 dans la couche translucide 16 est mise en oeuvre avant application de celle-ci sur la couche formant substrat de base 10.

43. Une méthode pour former une plaque de signalisation destinée à un véhicule telle que revendiquée dans n'importe lesquelles des revendications 40 à 42, où l'étape consistant à appliquer une marque 12 définissant une matière visuelle devant être communiquée par la signalisation sur la surface avant 14 de la couche formant substrat de base 10 est précédée par l'étape consistant à appliquer une couche intermédiaire réfléchissante entre la couche formant substrat de base 10 et la marque 12.

44. Une méthode pour former une plaque de signalisation destinée à un véhicule telle que revendiquée dans n'importe lesquelles des revendications 40 à 43, où la méthode inclut en outre l'étape consistant à appliquer une couche de diffusion de lumière 26 par-dessus substantiellement la totalité de l'arrière de la plaque de signalisation.

45. Une méthode pour former une plaque de signalisation destinée à un véhicule, la méthode comprenant les étapes consistant à :
- fournir une couche formant substrat de base 10 d'un matériau translucide définissant des surfaces avant 14 et arrière,
- appliquer une marque 12 définissant une matière visuelle devant être communiquée par la signalisation sur une surface avant 14 de la couche formant substrat de base 10,
- appliquer une couche de matériau réfléchissant opaque 20 sur une surface arrière du matériau translucide, où ladite couche définit des ouvertures 22 en général calées sur la marque 12 appliquée sur la face avant 14 du substrat de base.

46. Une méthode pour former une plaque de signalisation destinée à un véhicule telle que revendiquée dans la revendication 45,
où l'étape consistant à appliquer une marque 12 définissant une matière visuelle devant être communiquée par la signalisation sur la surface avant 14 de la couche formant substrat de base 10 est précédée par l'étape consistant à appliquer une couche intermédiaire réfléchissante entre la couche formant substrat de base 10 et la marque 12.

47. Une méthode pour former une plaque de signalisation destinée à un véhicule telle que revendiquée dans la revendication 45
ou la revendication 46, où la méthode inclut en outre l'étape consistant à appliquer une couche de diffusion de lumière 26 par-dessus substantiellement la totalité de l'arrière de la plaque de signalisation.
